# EUROPEAN PATENT APPLICATION

(11) **EP 3 179 789 A1**
(43) Date of publication of application: **14.06.2017**
(21) Application number: 15830660.5
(22) Date of filing: 30.03.2015
(51) Int. Cl.: H04W 56/00

(54) **D2D COMMUNICATION METHOD AND DEVICE**

(30) Priority: 08.08.2014 CN 201410390994; 21.08.2014 CN 201410416527
(71) Applicant: ZTE Corporation, Shenzhen, Guangdong 518057 (CN)
(72) Inventor: HUANG, Shuanghong, Shenzhen Guangdong 518057 (CN); WU, Shuanshuan, Shenzhen Guangdong 518057 (CN); YUAN, Ming, Shenzhen Guangdong 518057 (CN); YUAN, Yifei, Shenzhen Guangdong 518057 (CN); LU, Youxiong, Shenzhen Guangdong 518057 (CN)
(74) Representative: Brunazzi, Stefano
(86) International application number: PCT/CN2015/075418
(87) International publication number: WO 2016/019734

(57) **Abstract**

Provided are a D2D communication method and device, wherein the method includes: a D2D UE determines whether to transmit a D2D synchronization signal within a current D2D resource period; and if so, the D2D UE transmits the D2D synchronization signal, wherein the D2D UE determines whether to transmit the D2D synchronization signal within the current D2D resource period according to at least one of the following: a received indication signalling; and a priority rule. The present disclosure solves the problem that D2D UEs belonging to neighbor cells under different base stations cannot realize timing synchronization in the related art, realizing that D2D UEs belonging to neighbor cells under different base stations transmit a D2D synchronization signal for synchronization within a D2D resource period determined to transmit the D2D synchronization signal.

## Description

### Technical field

The present disclosure relates to the field of communications, and more particularly, to a Device-to-Device (referred to as D2D) communication method and device.

### Background

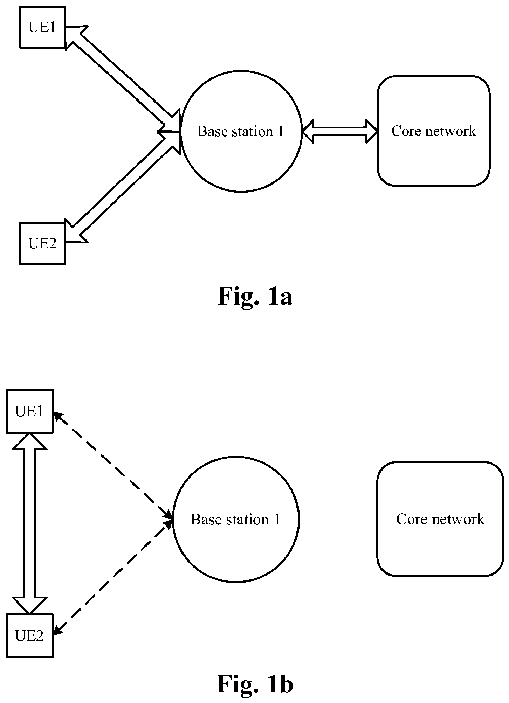

In a cellular communication system, when there is a traffic transmission between two user equipments (referred to as UE), for example, traffic data from UE1 to UE2 is first transmitted through an air interface to the base station or Node B or evolved Node B of the cell where the UE1 is located, the base station transmits the user data to the base station of the cell where the UE2 is located through a core network, and then the base station transmits the abovementioned traffic data to the UE2 through the air interface. A similar process flow is used for traffic data transmission from the UE2 to the UE1. Fig. 1a shows a first schematic diagram of cellular communication and D2D communication of UEs located in cells of the same base station according to the related art. As shown in Figure 1a, when the UE1 and the UE2 are located in the same cell, though both UEs are covered by cells of the same base station, data transmission still needs to transit through the core network, and a single data transmission will still consume two radio spectrum resources.

It can be seen that if the UE1 and the UE2 are located closer, the abovementioned cellular communication method is clearly not optimal. In fact, with the diversification of mobile communication services, such as the popularization of social networking, electronic payment and other applications in the wireless communication system, the demand for traffic transmission between close-range users is growing. Therefore, the D2D communication mode has received increasing attention. Fig. 1b shows a second schematic diagram of cellular communication and D2D communication of UEs located in cells of the same base station according to the related art. As shown in Figure 1b, D2D means that traffic data is not forwarded through the base station and the core network and is transmitted directly from the source UE to the target UE through the air interface, and may also be known as the Proximity Service (referred to as ProSe). For users of close-range communication, D2D not only saves wireless spectrum resources, but also reduces the data transmission pressure of the core network.

In the cellular communication, the base station performs the data communication with the UE on the premise of realizing the time synchronization for the base station and the UE. The UE realizes the downlink timing synchronization with the base station by detecting the downlink synchronization signal transmitted by the base station, including a Primary Synchronization Signal (referred to as PSS) and a Secondary Synchronization Signal (referred to as SSS), and realizes the uplink timing synchronization with the base station by compensating for Timing Advance (referred to as TA).

Similarly, in the D2D communication system, it is necessary to realize timing synchronization between the transmission UE and the reception UE of the D2D signal, and it is possible to correctly receive and demodulate the D2D signal. For the signal communication of the D2D UE in the same cell, it is natural that the timing synchronization can be obtained by performing the relevant compensation according to the downlink synchronization signal transmitted by the base station corresponding to the cell to which it belongs or in combination with TA value, so as to realize timing synchronization between the transmission D2D UE and the reception D2D UE. However, for the inter-cell D2D UE signal communication, it differs in different situations. For a synchronization deployment network, the timing reference of different base stations is strictly synchronized. Therefore, the neighboring inter-cell D2D UE can also obtain the timing synchronization in the same way as the intra-cell D2D UE to complete the communication between different D2D UEs between neighbor cells. However, for an asynchronous deployment network, the timing reference of different base stations is not strictly aligned. At this time, the D2D UEs belonging to the neighbor cells under different base stations cannot realize the timing synchronization according to the synchronization signal or the TA value issued by the base stations they belong to.

No effective solutions have been proposed at present to solve the problem that the D2D UEs belonging to the neighbor cells under different base stations cannot realize timing synchronization in the related art.

### Summary

The embodiment of the present disclosure provides a D2D communication method and device to at least solve the problem that the D2D UEs belonging to the neighbor cells under different base stations cannot realize timing synchronization in the related art.

According to one embodiment of the present disclosure, a D2D communication method is provided. The method includes: a D2D UE determines whether to transmit a D2D synchronization signal within a current D2D resource period; and if so, the D2D UE transmits the D2D synchronization signal, herein the D2D UE determines whether to transmit the D2D synchronization signal within the current D2D resource period according to at least one of the following: a received indication signalling; and a priority rule.

In the present embodiment, the D2D UE determines whether to transmit the D2D synchronization signal according to the indication signaling, including that: in the case that the indication signaling indicates a D2D resource period in which the D2D synchronization signal is transmitted, if the current D2D resource period is the D2D resource period indicated by the indication signaling, the UE transmits the D2D synchronization signal.

In the present embodiment, the indication signaling includes: a parameter for indicating a D2D synchronization signal transmission period and/or a D2D synchronization signal transmission offset, herein the D2D UE determines the D2D resource period in which the D2D synchronization signal is transmitted according to the parameter.

In the present embodiment, the indication signaling further includes: a parameter for indicating valid time of the content in the indication signaling, herein the D2D UE updates the content in the indication signaling according to the parameter of the valid time.

In the present embodiment, the D2D synchronization signal transmission period is N times of the D2D resource period, and N is a positive integer; and/or the D2D synchronization signal transmission offset is an offset amount of the D2D resource period in which the D2D UE transmits the D2D synchronization signal within the D2D synchronization signal transmission period, and the D2D resource period is an offset granularity.

In the present embodiment, the method further includes that: the D2D synchronization signal transmission offset is also obtained by calculating an identification number of the D2D UE and a parameter for indicating the D2D synchronization signal transmission period.

In the present embodiment, the indication signaling further includes: a parameter for indicating a radio resource location where the D2D UE transmits the D2D signal; herein the D2D UE transmits the D2D signal at a radio resource location corresponding to the parameter of the radio resource location.

In the present embodiment, the D2D UE determines whether to transmit the D2D synchronization signal according to the indication signaling, further including that: in the case that the indication signaling indicates a Reference Signal Receiving Power (RSRP) threshold for transmitting the D2D synchronization signal, if the RSRP received by the current D2D UE satisfies the RSRP threshold, the UE transmits the D2D synchronization signal.

In the present embodiment, the indication signaling is contained in the broadcast message; or the indication signaling is UE-dedicated signaling, and is contained in dedicated RRC signaling or physical layer signaling.

In the present embodiment, the D2D UE determines whether to transmit the D2D synchronization signal according to the priority rule, further including that: when the D2D UE needs to transmit a D2D signal, the D2D UE determines a resource location for transmitting the D2D signal; and if the radio resource transmitting the D2D signal collides with the radio resource for transmitting the D2D synchronization signal, the D2D UE does not transmit the D2D signal within the time domain resource transmitting the D2D synchronization signal within the D2D resource period in which the D2D synchronization signal is transmitted; or if the radio resource transmitting the D2D signal collides with the radio resource for transmitting the D2D synchronization signal, the D2D UE does not transmit the D2D synchronization signal within the D2D resource period; or if the radio resource transmitting the D2D signal collides with the radio resource for transmitting the D2D synchronization signal, the D2D UE does not transmit the D2D signal within a D2D resource unit containing the D2D synchronization signal time domain resource, the D2D resource unit being a minimum resource transmitting the D2D signal.

In the present embodiment, the D2D UE determines whether to transmit the D2D synchronization signal according to the priority rule, further including that: when the D2D UE needs to transmit a D2D signal, the UE determines a resource location for transmitting the D2D signal; and if the radio resource transmitting the D2D signal collides with the radio resource for transmitting the D2D synchronization signal, the D2D signal is not transmitted within the colliding radio resource.

In the present embodiment, the method further includes that: the base station selects a part of or all UEs of the D2D UE in the radio resource control (RRC) connected state to transmit the D2D synchronization signal; and the base station issues the indication signaling according to the selecting result.

In the present embodiment, the method further includes that: for a D2D UE that transmits a D2D synchronization signal, the base station specifies the radio resource for transmitting the D2D signal within the D2D resource period for the D2D UE in a semi-static scheduling manner, and avoids radio resource for transmitting the D2D synchronization signal in the time domain.

According to another embodiment of the present disclosure, a D2D communication method is provided. The method includes that: a current D2D terminal UE receives a D2D synchronization signal from the D2D UE of the neighbor cell, herein the current D2D UE determines whether to receive the D2D synchronization signal within the current D2D resource period according to the received indication signaling; and the current D2D UE implements the synchronization of D2D communication with the D2D UE of the neighbor cell according to the D2D synchronization signal.

In the present embodiment, the method further includes that: the current D2D UE does not receive a D2D signal within a resource receiving the D2D synchronization signal.

According to another embodiment of the present disclosure, a D2D communication device, located in a D2D terminal User Equipment (UE), is provided, including: a determining module configured to determine whether to transmit a D2D synchronization signal within a current D2D resource period; and a transmitting module configured to transmit the D2D synchronization signal in the case that the determining result of the determining module is yes; herein the D2D UE determines whether to transmit the D2D synchronization signal within the current D2D resource period according to at least one of the following: received indication signalling; and a priority rule.

In the present embodiment, the determining module is further configured to: in the case that the indication signaling indicates a D2D resource period in which the D2D synchronization signal is transmitted, if the current D2D resource period is the D2D resource period indicated by the indication signaling, determine to transmit the D2D synchronization signal.

In the present embodiment, the indication signaling includes: a parameter for indicating a D2D synchronization signal transmission period and/or a D2D synchronization signal transmission offset, herein the D2D UE determines the D2D resource period in which the D2D synchronization signal is transmitted according to the parameter.

In the present embodiment, the indication signaling further includes: a parameter for indicating valid time of the content in the indication signaling, herein the D2D UE updates the content in the indication signaling according to the parameter of the valid time.

In the present embodiment, the D2D synchronization signal transmission period is N times of the D2D resource period, and N is a positive integer; and/or the D2D synchronization signal transmission offset is an offset amount of the D2D resource period in which the D2D UE transmits the D2D synchronization signal within the D2D synchronization signal transmission period, and the D2D resource period is an offset granularity.

In the present embodiment, the device further includes: a calculation module configured to obtain the D2D synchronization signal transmission offset by calculating an identification number of the D2D UE and a parameter for indicating the D2D synchronization signal transmission period.

In the present embodiment, the indication signaling further includes: a parameter for indicating a radio resource location where the D2D UE transmits the D2D signal; herein the D2D UE transmits the D2D signal at a radio resource location corresponding to the parameter of the radio resource location.

In the present embodiment, the determining module is further configured to: in the case that the indication signaling indicates a Reference Signal Receiving Power (RSRP) threshold for transmitting the D2D synchronization signal, if the RSRP received by the current D2D UE satisfies the RSRP threshold, transmit, by the D2D UE, the D2D synchronization signal.

In the present embodiment, the indication signaling is contained in the broadcast message; or the indication signaling is UE-dedicated signaling, and is contained in dedicated RRC signaling or physical layer signaling.

In the present embodiment, the determining module is further configured to: when the D2D UE needs to transmit a D2D signal, determine a resource location for transmitting the D2D signal; and if the radio resource transmitting the D2D signal collides with the radio resource for transmitting the D2D synchronization signal, not transmit the D2D signal within the time domain resource transmitting the D2D synchronization signal within the D2D resource period in which the D2D synchronization signal is transmitted; or if the radio resource transmitting the D2D signal collides with the radio resource for transmitting the D2D synchronization signal, not transmit the D2D synchronization signal within the D2D resource period; or if the radio resource transmitting the D2D signal collides with the radio resource for transmitting the D2D synchronization signal, not transmit the D2D signal within a D2D resource unit containing the D2D synchronization signal time domain resource, the D2D resource unit being a minimum resource transmitting the D2D signal.

In the present embodiment, the determining module is further configured to: when the D2D UE needs to transmit a D2D signal, determine, by the UE, a resource location for transmitting the D2D signal; and if the radio resource transmitting the D2D signal collides with the radio resource for transmitting the D2D synchronization signal, not transmit the D2D signal within the colliding radio resource.

According to another embodiment of the present disclosure, a D2D communication device, located in a D2D terminal UE, is provided, including: a receiving module configured to receive a D2D synchronization signal from the D2D UE of the neighbor cell, herein the current D2D UE determines whether to receive the D2D synchronization signal within the current D2D resource period according to the received indication signaling; and a synchronizing module configured to implement the synchronization of D2D communication with the D2D UE of the neighbor cell according to the D2D synchronization signal.

In the present embodiment, the receiving module is further configured to: not receive a D2D signal within a resource receiving the D2D synchronization signal.

According to the embodiments of the present disclosure, the D2D terminal UE is used to determine whether to transmit a D2D synchronization signal within a current D2D resource period; and if so, the D2D UE transmits the D2D synchronization signal, herein the D2D UE determines whether to transmit the D2D synchronization signal within the current D2D resource period according to at least one of the following: received indication signalling; and a priority rule. The problem that D2D UEs belonging to neighbor cells under different base stations cannot realize timing synchronization in the related art is solved, and it is realized that D2D UEs belonging to neighbor cells under different base stations transmit a D2D synchronization signal for synchronization within a D2D resource period determined to transmit the D2D synchronization signal, and a technical basis is provided for reducing the influence of transmitting the D2D synchronization signal on D2D communication in consideration of the D2D resource period in which the D2D synchronization signal is transmitted.

### Brief description of the drawings

The drawings described herein are intended to provide a further understanding of the present disclosure and form a part of the application. The illustrative embodiments of the present disclosure and the description thereof are illustrative of the present disclosure and are not to be construed as limiting the present disclosure. In the drawings:
Fig. 1a is a first schematic diagram of cellular communication and D2D communication of UEs located in cells of the same base station according to the related art;
Fig. 1b is a second schematic diagram of cellular communication and D2D communication of UEs located in cells of the same base station according to the related art;
Fig. 2 is a flow diagram of a D2D communication method according to an embodiment of the present disclosure;
Fig. 3 is a structure block diagram of a D2D communication method according to an embodiment of the present disclosure;
Fig. 4 is a flow schematic diagram of a D2D signal communication method according to a preferred embodiment of the present disclosure;
Fig. 5 is a schematic diagram of a radio resource structure according to a preferred embodiment of the present disclosure;
Fig. 6 is a schematic diagram of a cellular network deployment according to a preferred embodiment of the present disclosure;
Fig. 7a is a first schematic diagram of a D2D synchronization signal transmission according to a first preferred embodiment of the present disclosure;
Fig. 7b is a second schematic diagram of a D2D synchronization signal transmission according to a first preferred embodiment of the present disclosure;
Fig. 8 is a schematic diagram of a D2D synchronization signal transmission according to a second preferred embodiment of the present disclosure;
Fig. 9 is a first schematic diagram of a D2D synchronization signal transmission according to a third preferred embodiment of the present disclosure;
Fig. 10 is a second schematic diagram of a D2D synchronization signal transmission according to a third preferred embodiment of the present disclosure;
Fig. 11 is a third schematic diagram of a D2D synchronization signal transmission according to a third preferred embodiment of the present disclosure;
Fig. 12 is a flow diagram of another D2D communication method according to an embodiment of the present disclosure; and
Fig.13 is a structure block diagram of another D2D communication device according to an embodiment of the present disclosure.

### Detailed description of the embodiments

Hereinafter, the present disclosure will be described in detail with reference to the accompanying drawings and in combination with embodiments. It should be noted that, in the case of no conflict, the embodiments of the present application and the features of the embodiments may be combined with each other.

For inter-cell D2D communication synchronization of the non-synchronization deployment network, the D2D UE may obtain the neighbor cell D2D signal transmission timing by detecting the synchronization signal transmitted by the D2D UE of the neighbor cell, but the synchronization signal transmitted by the D2D UE may have influence on the transmission of the D2D signal and the cellular signal. Such influence will have different degrees when selecting different UEs to transmit the synchronization signal or using different transmission manners.

The present embodiment provides a solution to the abovementioned problem to realize the synchronization of D2D communication between cells while minimizing the influence on the transmission of the D2D signal and the cellular signal as much as possible.

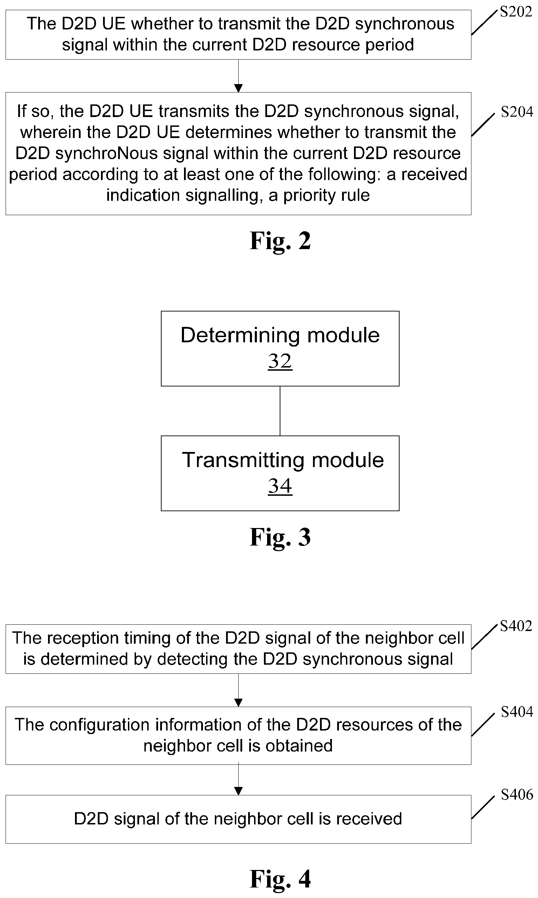

In the present embodiment, a D2D communication method is provided. Fig. 2 is a flow diagram of a D2D communication method according to an embodiment of the present disclosure. As shown in Fig. 2, the method includes the following steps.

Step S202: the D2D terminal (UE) determines whether to transmit the D2D synchronization signal within the current D2D resource period.

Step S204: if so, the D2D UE transmits the D2D synchronization signal.

Herein the D2D UE determines whether to transmit the D2D synchronization signal within the current D2D resource period according to at least one of the following:
A received indication signalling; and a priority rule.

In the present embodiment, the D2D UE determines whether to transmit the D2D synchronization signal within the current D2D resource period in the above steps, and retransmits the D2D synchronization signal when it is determined that the D2D synchronization signal is transmitted within the current D2D resource period. The problem that D2D UEs belonging to neighbor cells under different base stations cannot realize timing synchronization in the related art is solved, and it is realized that D2D UEs belonging to neighbor cells under different base stations transmit a D2D synchronization signal for synchronization within a D2D resource period determined to transmit the D2D synchronization signal, and a technical basis is provided for reducing the influence of transmitting the D2D synchronization signal on D2D communication in consideration of the D2D resource period in which the D2D synchronization signal is transmitted.

Further, in the present embodiment, the received indication signaling and/or priority rules may be used such that the D2D UE does not simultaneously transmit a D2D synchronization signal and a D2D signal on the same resource, so that it is possible to avoid the influence of transmitting the D2D synchronization signal on D2D communication.

In the present embodiment, the D2D UE determines whether to transmit the D2D synchronization signal according to the indication signaling, which may includes that:
in the case that the indication signaling indicates a D2D resource period in which the D2D synchronization signal is transmitted, if the current D2D resource period is the D2D resource period indicated by the indication signaling, the UE may transmit the D2D synchronization signal.

In the present embodiment, the indication signaling may include: a parameter for indicating a D2D synchronization signal transmission period and/or a D2D synchronization signal transmission offset; herein the D2D UE determines the D2D resource period in which the D2D synchronization signal is transmitted according to the parameter.

Preferably, the indication signaling may further include: a parameter for indicating valid time of the content in the indication signaling, herein the D2D UE updates the content in the indication signaling according to the parameter of the valid time. Herein the content in the indication signaling may include a parameter for indicating a D2D synchronization signal transmission period and/or a D2D synchronization signal transmission offset, etc.

Herein the D2D synchronization signal transmission period may be N times of the D2D resource period, and N is a positive integer; and/or the D2D synchronization signal transmission offset may be an offset amount of the D2D resource period in which the D2D UE transmits the D2D synchronization signal within the D2D synchronization signal transmission period, and the D2D resource period is an offset granularity.

In the present embodiment, the D2D synchronization signal transmission offset may be obtained by calculating an identification number of the D2D UE and a parameter for indicating the D2D synchronization signal transmission period. For example, the D2D UE may be divided into different groups according to the result value that the identification number of the D2D UE performs modulo operation on N.

In the present embodiment, the indication signaling may further include: a parameter for indicating a radio resource location where the D2D UE transmits the D2D signal; herein the D2D UE transmits the D2D signal at a radio resource location corresponding to the parameter of the radio resource location so as to avoid a conflict with the D2D synchronization signal.

In the present embodiment, in the case that the indication signaling indicates a RSRP threshold for transmitting the D2D synchronization signal, if the RSRP received by the current D2D UE satisfies the RSRP threshold, the UE transmits the D2D synchronization signal.

In the present embodiment, the indication signaling may be contained in the broadcast message; or the indication signaling may be UE-dedicated signaling, and is contained in dedicated RRC signaling or physical layer signaling.

In the present embodiment, the D2D UE determines whether to transmit the D2D synchronization signal according to the priority rule, which may include that:
when the D2D UE needs to transmit a D2D signal, the D2D UE determines a resource location for transmitting the D2D signal; and
if the radio resource transmitting the D2D signal collides with the radio resource for transmitting the D2D synchronization signal, the D2D UE does not transmit the D2D signal within the time domain resource transmitting the D2D synchronization signal within the D2D resource period in which the D2D synchronization signal is transmitted;
or if the radio resource transmitting the D2D signal collides with the radio resource for transmitting the D2D synchronization signal, the D2D UE does not transmit the D2D synchronization signal within the D2D resource period;
or if the radio resource transmitting the D2D signal collides with the radio resource for transmitting the D2D synchronization signal, the D2D UE does not transmit the D2D signal within a D2D resource unit containing the D2D synchronization signal time domain resource, the D2D resource unit being a minimum resource transmitting the D2D signal. For example, the minimum unit of the D2D resource unit in the time domain is a sub-frame, that is, the D2D signal is not transmitted only on the sub-frame in which the D2D synchronization signal is located.

Preferably, when the D2D UE needs to transmit a D2D signal, the UE determines a resource location for transmitting the D2D signal; and if the radio resource transmitting the D2D signal collides with the radio resource for transmitting the D2D synchronization signal, the D2D signal is not transmitted within the colliding radio resource.

Herein, the abovementioned radio resource may include a time domain resource and a frequency domain resource. The abovementioned collision may be a radio resource that selectively transmits a D2D synchronization signal or transmits a D2D signal, and may overlap with a radio resource that the D2D UE itself or another D2D UE may transmit a D2D synchronization signal or transmit a D2D signal.

The D2D UE described above is mainly a D2D UE in an idle (IDLE) state. In the present embodiment, for the D2D UE in the RRC connected state, the D2D UE receives indication signaling from the base station and determines whether to allow the transmission of the D2D synchronization signal according to the indication signaling. The base station side of the above solution is described specifically as follows.

Before the D2D UE determines whether to transmit the D2D synchronization signal according to the indication signaling, the base station selects a part of or all UEs of the D2D UE in the RRC connected state to transmit the D2D synchronization signal; and the base station issues the indication signaling according to the selecting result.

Herein the abovementioned signaling may include at least one of: RRC-dedicated signaling, which may include adding information to the existing RRC signaling and the newly added RRC signaling; and the newly added Downlink Control Information (referred to as DCI), the Radio Network Tempory Identity (referred to as RNTI) of which may correspond to a D2D synchronization signal. The content of the signaling indication may include whether the D2D UE transmits the D2D synchronization signal, and/or a period in which the D2D synchronization signal is transmitted, and/or an offset in which the D2D synchronization signal is transmitted, and/or valid time when the D2D synchronization signal is transmitted.

In the present embodiment, the base station may also select the D2D UE that transmits the D2D synchronization signal in a scheduled manner. Herein the base station may sequentially select one or more UEs of the D2D UE in the RRC connected state to transmit the D2D synchronization signal in a polling manner; alternatively, the base station may also select a D2D UE that transmits the D2D synchronization signal according to the value of the Channel Quality Indicator (referred to as CQI) and/or Modulation and Coding Scheme (referred to as MCS) of the cellular uplink; alternatively, the base station may also measure the uplink path loss corresponding to the D2D UE in the RRC connected state, and select the UE that transmits the D2D synchronization signal according to the value of the corresponding uplink path loss.

In the present embodiment, for a D2D UE that transmits a D2D synchronization signal, the base station may specify the radio resource for transmitting the D2D signal within the D2D resource period for the D2D UE in a semi-static scheduling manner, and avoids radio resource for transmitting the D2D synchronization signal in the time domain.

Alternatively, for the D2D UE that transmits the D2D synchronization signal, the base station may specify the radio resource for transmitting the D2D signal in the D2D resource period for the D2D UE in a semi-static scheduling manner, and enable the radio resource for transmitting the D2D signal to contain the radio resource for transmitting the D2D synchronization signal in the time domain; herein, in the D2D resource period in which the D2D UE transmits the D2D synchronization signal, the D2D signal is not transmitted in the time domain resource in which the transmission of the D2D signal collides with the transmission of the D2D synchronization signal; and/or in the D2D resource period in which the D2D UE does not transmit the D2D synchronization signal, if the radio resource transmitting the D2D signal collides with the time domain and/or frequency domain resources for transmitting the D2D synchronization signal, the D2D signal is not transmitted in the collided time domain resource and/or frequency domain resource.

Corresponding to the abovementioned method, in the present embodiment, there is also provided a D2D communication device, located in the D2D UE. The device is configured to implement the abovementioned embodiments and preferred embodiments which have been described and will not be described again. As used below, the term "module" may be implemented as a combination of software and/or hardware with a predetermined function. Although the device described in the following embodiments is preferably implemented in software, the implementation of hardware or a combination of software and hardware is also possible and contemplated.

Fig. 3 is a structure block diagram of a D2D communication method according to an embodiment of the present disclosure. As shown in Fig. 3, the device includes a determining module 32 and a transmitting module 34, which will be described in detail below.

The determining module 32 is configured to determine whether to transmit a D2D synchronization signal within a current D2D resource period; and the transmitting module 34 is connected with the determining module 32, and is configured to transmit the D2D synchronization signal in the case that the determining result of the determining module 32 is yes; herein the D2D UE determines whether to transmit the D2D synchronization signal within the current D2D resource period according to at least one of the following: a received indication signalling; and a priority rule.

Preferably, the determining module 32 may be further configured to: in the case that the indication signaling indicates a D2D resource period in which the D2D synchronization signal is transmitted, if the current D2D resource period is the D2D resource period indicated by the indication signaling, determine to transmit the D2D synchronization signal.

Preferably, the indication signaling may include: a parameter for indicating a D2D synchronization signal transmission period and/or a D2D synchronization signal transmission offset, herein the D2D UE determines the D2D resource period in which the D2D synchronization signal is transmitted according to the parameter.

Preferably, the indication signaling may further include: a parameter for indicating valid time of the content in the indication signaling, herein the D2D UE updates the content in the indication signaling according to the parameter of the valid time.

Preferably, the D2D synchronization signal transmission period is N times of the D2D resource period, and N is a positive integer; and/or the D2D synchronization signal transmission offset is an offset amount of the D2D resource period in which the D2D UE transmits the D2D synchronization signal within the D2D synchronization signal transmission period, and the D2D resource period is an offset granularity.

Preferably, the device further includes: a calculation module, which is connected with the determining module 32 and is configured to obtain the D2D synchronization signal transmission offset by calculating an identification number of the D2D UE and a parameter for indicating the D2D synchronization signal transmission period.

Preferably, the indication signaling may further include: a parameter for indicating a radio resource location where the D2D UE transmits the D2D signal; herein the D2D UE transmits the D2D signal at a radio resource location corresponding to the parameter of the radio resource location.

Preferably, the determining module 32 may be further configured to: in the case that the indication signaling indicates a Reference Signal Receiving Power (RSRP) threshold for transmitting the D2D synchronization signal, if the RSRP received by the current D2D UE satisfies the RSRP threshold, transmit, by the UE, the D2D synchronization signal.

Preferably, the indication signaling may be contained in the broadcast message; or the indication signaling may be UE-dedicated signaling and may be contained in dedicated RRC signaling or physical layer signaling.

Preferably, the determining module 32 may be further configured to: when the D2D UE needs to transmit a D2D signal, determine a resource location for transmitting the D2D signal; and if the radio resource transmitting the D2D signal collides with the radio resource for transmitting the D2D synchronization signal, not transmit the D2D signal within the time domain resource transmitting the D2D synchronization signal within the D2D resource period in which the D2D synchronization signal is transmitted; or if the radio resource transmitting the D2D signal collides with the radio resource for transmitting the D2D synchronization signal, not transmit the D2D synchronization signal within the D2D resource period; or if the radio resource transmitting the D2D signal collides with the radio resource for transmitting the D2D synchronization signal, not transmit the D2D signal within a D2D resource unit containing the D2D synchronization signal time domain resource, the D2D resource unit being a minimum resource transmitting the D2D signal. For example, the minimum unit of the D2D resource unit in the time domain is a sub-frame, that is, the D2D signal is not transmitted only on the sub-frame in which the D2D synchronization signal is located.

Preferably, the determining module 32 may be further configured to: when the D2D UE needs to transmit a D2D signal, determine, by the UE, a resource location for transmitting the D2D signal; and if the radio resource transmitting the D2D signal collides with the radio resource for transmitting the D2D synchronization signal, not transmit the D2D signal within the colliding radio resource.

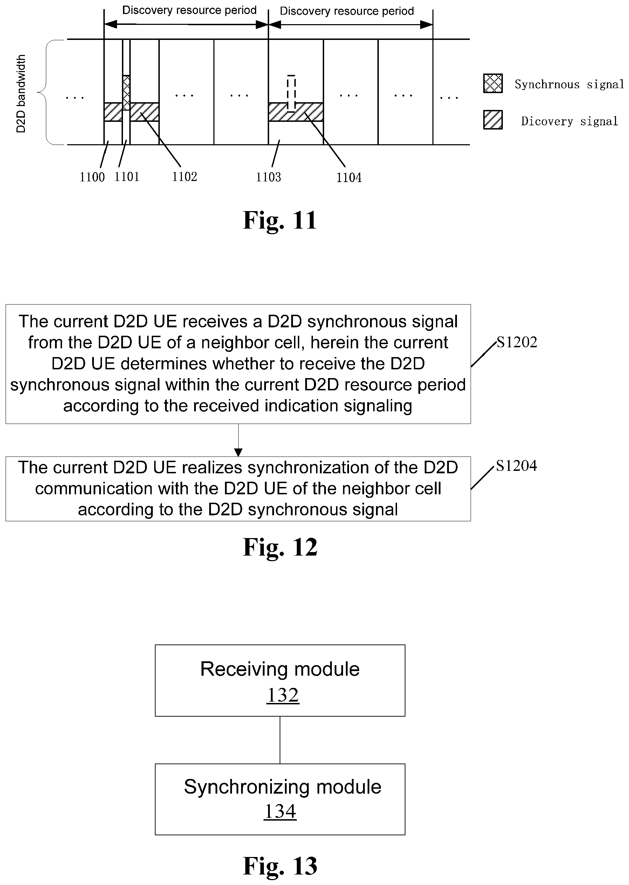

In the present embodiment, another D2D communication method is provided. Fig. 12 is a flow diagram of another D2D communication method according to an embodiment of the present disclosure. As shown in Fig. 12, the method includes the following steps.

Step S1202: the current D2D UE receives a D2D synchronization signal from the D2D UE of a neighbor cell, herein the current D2D UE determines whether to receive the D2D synchronization signal within the current D2D resource period according to the received indication signaling.

Step S1204: the current D2D UE realizes synchronization of the D2D communication with the D2D UE of the neighbor cell according to the D2D synchronization signal.

In the present embodiment, the current D2D UE does not receive the D2D signal within the resource receiving the D2D synchronization signal.

Corresponding to the abovementioned another D2D communication method, in the present embodiment, another D2D communication device, located in the D2D UE, is also provided. Fig.13 is a structure block diagram of another D2D communication device according to an embodiment of the present disclosure. As shown in Fig. 13, the device includes:
a receiving module 132 configured to receive a D2D synchronization signal from the D2D UE of the neighbor cell, herein the current D2D UE determines whether to receive the D2D synchronization signal within the current D2D resource period according to the received indication signaling; and a synchronizing module 134, which is connected with the receiving module 132 and is configured to realize the synchronization of D2D communication with the D2D UE of the neighbor cell according to the D2D synchronization signal.

Preferably, the receiving module 132 may be further configured to: not receive a D2D signal within a resource receiving the D2D synchronization signal.

The following is described in connection with preferred embodiments, and the following preferred embodiments incorporate the abovementioned embodiments and preferred embodiments thereof.

In the following preferred embodiments, considering that the timing deviation exists between different base stations in the inter-cell D2D communication, especially in the asynchronization network deployment, when the D2D data communication is performed between the UEs of the neighbor cells belonging to different base stations, timing non-alignment causes the UE to not correctly receive the D2D signal from the neighbor cells. The UE must know the reference timing of the signal transmitted by the UE of the neighbor cells and the resource allocation information of the D2D UE of the neighbor cells in order to correctly receive the D2D signal of the UE of the neighbor cells.

Based on the above considerations, the following preferred embodiments provide a device-to-device signal communication method, which solves the problem of synchronization of D2D communications between neighbor cells of different base stations in an asynchronization network deployment. The method includes that: the D2D UE of the neighbor cells transmits the synchronization signal according to a predetermined criterion or signaling indication, and the D2D UE obtains the transmission timing of the D2D UE of the neighbor cells through the synchronization signal transmitted by the D2D UE of the neighbor cells, and combines the resource allocation information of the D2D UE of the neighbor cells again to realize the reception of the D2D signal of the neighbor cells.

The method is specifically described as follows: the cell that the D2D UE belongs to is a reference cell, the neighbor cell is a neighbor cell which is not in the same eNB as the reference cell, the D2D UE of the neighbor cell determines whether to transmit the synchronization signal according to a predefined criterion or signaling indication, the D2D UE determines the transmission timing of the D2D signal of the neighbor cell by detecting the synchronization signal transmitted from the D2D UE of the neighbor cell and determines the start position of the D2D resource period of the neighbor cell according to the transmission timing of the D2D signal of the neighbor cell. The D2D UE completes the reception of the D2D signal of the neighbor cell in the corresponding D2D resource period in combination with the configuration information of the D2D resource period.

The D2D signal communication method provided in the present preferred embodiment will be described in detail below.

Fig. 4 is a flow schematic diagram of a D2D signal communication method according to a preferred embodiment of the present disclosure. As shown in Fig. 4, the D2D communication method may be used for D2D signal communication between cells, including the following steps.

Step S402: the D2D UE determines the reception timing of the D2D signal corresponding to the neighbor cell by detecting the D2D synchronization signal transmitted by the D2D UE of the neighbor cell.

Step S404: the D2D UE obtains the configuration information of the D2D resources of the neighbor cell.

Step S406: the D2D UE receives the D2D signal of the neighbor cell based on the determined D2D signal reception timing and the resource configuration information, and extracts the D2D signal content.

Herein the D2D synchronization signal transmitted by the D2D UE of the neighbor cell includes a D2D Primary Synchronization Signal (referred to as PD2DSS) and a D2D Secondary Synchronization Signal (referred to as SD2DSS). The D2D UE of the neighbor cell transmits the D2D synchronization signal in the time domain and frequency domain radio resources fixed in the D2D resource period. The D2D resource period refers to a period of resources dedicated to the D2D communication delimited in the cellular communication resource.

Herein the D2D synchronization signal transmitted by the D2D UE of the neighbor cell includes a D2D synchronization signal transmitted by all D2D UEs or a part of D2D UEs. All D2D UEs or a part of the D2D UEs determine whether to transmit the D2D synchronization signal by the received indication signaling or the priority rules.

Herein when determining whether to transmit the D2D synchronization signal by the received indication signaling, the content of the received indication signaling includes a parameter N and a transmission offset. The D2D synchronization signal transmission period is N times of the D2D resource period, and N is a positive integer. The D2D synchronization signal transmission offset is the offset that the D2D resource period in which the D2D UE transmits the D2D synchronization signal is in the D2D synchronization signal transmission period, and the D2D resource period is the offset granularity. The D2D UE in the cell transmits the D2D synchronization signal according to the D2D synchronization signal transmission period and the D2D synchronization signal transmission offset, and each D2D UE has one opportunity to transmit the D2D synchronization signal during each D2D synchronization signal transmission period. The details of the description of the D2D synchronization signal transmission offset are as follows: corresponding to the fact that the D2D synchronization signal transmission period is N times of the D2D resource period, the D2D UE may be corresponding to different groups according to the result value that the identification number of the D2D UE performs modulo operation on N. The D2D UEs of different groups correspond to different D2D synchronization signal transmission offsets which can be obtained by calculation according to the UE identification, the current radio frame number, the number of radio frames contained in the D2D resource period, and N. The identification number of the D2D UE may uniquely identify the UE, and is distinguished from other UEs.

Herein the resource for transmitting the D2D synchronization signal and the resource for transmitting the D2D signal in the D2D resource period are processed according to a predetermined criterion, including that: in the D2D resource period in which the D2D synchronization signal is transmitted, the same D2D UE cannot transmit D2D signal in the time domain resources containing the resource for transmitting the D2D synchronization signal.

Herein the resource for transmitting the D2D synchronization signal and the resource for transmitting the D2D signal in the D2D resource period are processed according to a predetermined criterion and further includes that: in the D2D resource period in which the D2D synchronization signal is transmitted, for the same D2D UE, the D2D UE selects the resource for transmitting the D2D signal at random in all the time domain resources in the D2D resource period. If selecting the resource for transmitting the D2D signal and the resource for transmitting the D2D synchronization signal collides in the time domain, namely, selecting the time domain resource for transmitting the D2D synchronization signal to transmit D2D signal, the D2D UE cancels the D2D synchronization signal transmission in the D2D resource period.

Herein the resource for transmitting the D2D synchronization signal and the resource for transmitting the D2D signal in the D2D resource period are processed according to a predetermined criterion and further includes that: in the D2D resource period in which the D2D synchronization signal is transmitted, for the same D2D UE, the D2D UE selects the resource for transmitting the D2D signal at random in all the time domain resources in the D2D resource period. If selecting the resource for transmitting the D2D signal and the resource for transmitting the D2D synchronization signal collides in the time domain, namely, selecting the time domain resource for transmitting the D2D synchronization signal to transmit D2D signal, the D2D UE does not transmit a D2D signal in the time domain resource in which the transmission of the D2D signal collides with the transmission of the D2D synchronization signal.

Herein the resource for transmitting the D2D synchronization signal and the resource for transmitting the D2D signal in the D2D resource period are processed according to a predetermined criterion and further includes that: in the D2D resource period in which the D2D synchronization signal is transmitted, for the same D2D UE, if the D2D UE selects to transmit the D2D signal in the time domain resources containing the D2D synchronization signal, the D2D UE does not transmit a D2D signal in the time domain resource in which the transmission of the D2D signal collides with the transmission of the D2D synchronization signal.

The D2D UE selects the resource for transmitting the D2D signal among all the time domain resources in the D2D resource period, in the D2D resource period in which the D2D synchronization signal is not transmitted for the abovementioned three types of transmission modes of the D2D signal and the D2D synchronization signal, and if the radio resource for transmitting the D2D signal collides with the time domain and/or frequency domain resources used to transmit the D2D synchronization signal, the D2D signal is not transmitted in conflicting time domain and/or frequency domain resources.

Herein determining whether to transmit the D2D synchronization signal by the received indication signaling includes that: for the D2D UE in the RRC connected state, the base station may indicate the D2D UE in the RRC connected state by UE-dedicated signaling, the D2D UE in the RRC connected state determines whether to transmit the D2D synchronization signal and/or the period in which the D2D synchronization signal is transmitted and/or the offset in which the D2D synchronization signal is transmitted according to the content indicated by the UE-dedicated signaling. The D2D UE transmits the D2D synchronization signal in the fixed time domain and frequency domain resource in the D2D resource period.

Herein the signaling includes: RRC-dedicated signaling and the newly added DCI, in which the RRC-dedicated signaling includes adding information to the existing RRC signaling and the newly added RRC signaling. The RNTI of the newly added DCI corresponds to a D2D synchronization signal. The content of the signaling indication includes whether the D2D UE transmits the D2D synchronization signal, and/or a period in which the D2D synchronization signal is transmitted, and/or an offset in which the D2D synchronization signal is transmitted, and/or valid time when the D2D synchronization signal is transmitted.

Herein the content of the signaling indication is determined by the base station in a certain way, including that: the base station randomly selects a part of UEs of the D2D UE in the RRC connected state to transmit the D2D synchronization signal or selects all the D2D UEs in the RRC connected state to transmit the D2D synchronization signals.

Herein the content of the signaling indication is determined by the base station according to a certain way, further including that: the base station selects the D2D UE that transmits the D2D synchronization signal in a scheduled manner. Herein the scheduled manner includes that: the base station sequentially selects one or a part of the UEs of the D2D UE in the RRC connected state to transmit the D2D synchronization signal in a polling manner; alternatively, the base station may also select a D2D UE that transmits the D2D synchronization signal according to the value of the CQI and/or MCS of the cellular uplink. Herein the scheduled manner further includes that: the base station measures the uplink path loss corresponding to the D2D UE in the RRC connected state, and selects the UE that transmits the D2D synchronization signal according to the value of the corresponding uplink path loss.

Herein the D2D UE that transmits the D2D synchronization signal and/or transmits the D2D signal includes that: for the D2D UE that transmits a D2D synchronization signal, the base station specifies the radio resource for transmitting the D2D signal within the D2D resource period for the D2D UE in a semi-static scheduling manner, and avoids radio resource for transmitting the D2D synchronization signal in the time domain.

Herein the D2D UE that transmits the D2D synchronization signal and/or transmits the D2D signal further includes that: for the D2D UE that transmits a D2D synchronization signal, the base station specifies the radio resource for transmitting the D2D signal in the D2D resource period for the D2D UE in a semi-static scheduling manner, and enables the radio resource for transmitting the D2D signal to contain the radio resource for transmitting the D2D synchronization signal in the time domain. In the D2D resource period in which the D2D UE transmits the D2D synchronization signal, the D2D signal is not transmitted in the time domain resource in which the transmission of the D2D signal collides with the transmission of the D2D synchronization signal. In the D2D resource period in which the D2D UE does not transmit the D2D synchronization signal, if the radio resource transmitting the D2D signal collides with the time domain and/or frequency domain resources for transmitting the D2D synchronization signal, the D2D signal is not transmitted in the collided time domain resource and/or frequency domain resource.

In the present embodiment, the D2D UE obtains the configuration information of the D2D resource of the neighbor cell, including that: the D2D UE obtains the configuration information from the system message transmitted by the base station to which the serving cell belongs. The base station obtains the configuration information of the D2D resources of the neighbor cell in a manner of the high-level network configuration.

With this method, the signal communication of the inter-cell D2D UEs can be realized.

The D2D signal communication method provided by the present preferred embodiment will be described in detail below with reference to the accompanying drawings and specific embodiments.

The techniques described herein are applicable to cellular wireless communication systems or networks. Common cellular wireless communication systems may be based on Code Division Multiplexing Access (CDMA) technology, Frequency Division Multiplexing Access (FDMA) technology, Orthogonal-FDMA (OFDMA) technology, Single Carrier-FDMA (SC-FDMA) technology, and the like. For example, the3rd Generation Partnership Project (3GPP) Long Term Evolution (LTE)/ LTE-Advanced (LTE-A) cellular communication system downlink (or forward link) is based on the OFDMA technology, and the uplink (or reverse link) is based on SC-FDMA technology. In the future, it is possible to support hybrid multiple access technologies on a single link.

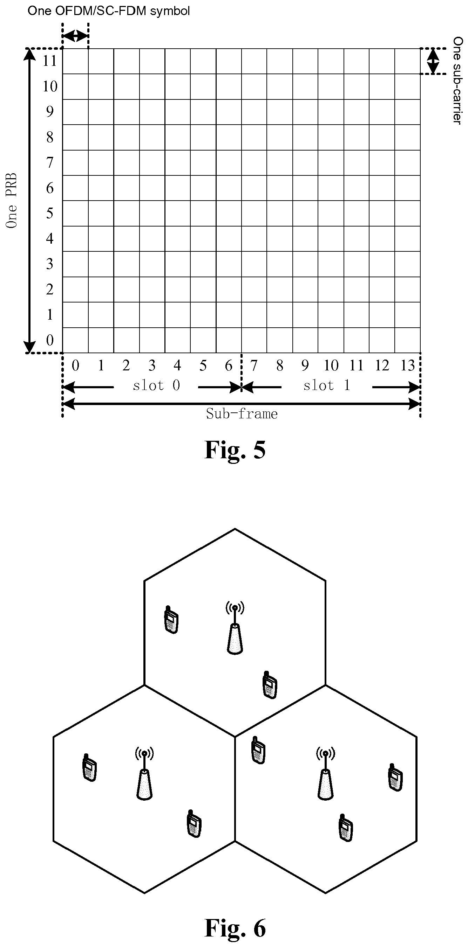

In an OFDMA/SC-FDMA system, a radio resource for communication is a two-dimensional form of time-frequency. For example, Fig. 5 is a schematic diagram of a radio resource structure according to a preferred embodiment of the present disclosure. As shown in Fig. 5, for LTE/LTE-A systems, both uplink and downlink communication resources are divided in the unit of radio frames in the time direction. Each radio frame is 10 ms long and contains 10 sub-frames each having a length of 1 ms. Each sub-frame includes two time slots having a length of 0.5 ms. Each time slot may include 6 or 7 OFDM or SC-FDM symbols depending on the different configurations of the Cyclic Prefix (referred to as CP).

In the frequency direction, resources are divided in the unit of subcarriers. Specifically, in the communication, the smallest unit of frequency domain resource allocation is Resource Block (RB), corresponding to one physical resource block (PRB) of physical resources. A PRB contains 12 sub-carriers in the frequency domain, corresponding to one time slot in the time domain. The resource corresponding to a subcarrier on each OFDM/SC-FDM symbol is called a Resource Element (RE), as shown in Fig. 5.

In the LTE/LTE-A cellular communication, the UE finds the LTE network by detecting a synchronization signal (referred to as SS). The synchronization signal includes a primary synchronization signal (referred to as PSS) and a secondary synchronization signal (referred to as SSS). By detecting the synchronization signal, the UE obtains downlink frequency and time synchronization with the base station. Moreover, since the synchronization signal carries a physical cell identity, detecting the synchronization signal also means that the UE finds the LTE/LTE-A cell.

In the uplink, when the UE has uplink data transmission, it is necessary to initiate random access (referred to as RA) for uplink synchronization and establish Radio Resource Control (referred to as RRC)) connection, that is, from the RRC idle (Idle) state to the RRC connected state. The UE needs to transmit a random access preamble during random access, and the network side realizes the identification of the UE and the synchronization of the uplink by detecting the random access preamble in a specific time-frequency resource.

Fig. 6 is a schematic diagram of a cellular network deployment according to a preferred embodiment of the present disclosure. As shown in Fig. 6, it may be a 3GPP LTE/LTE-A system, or other cellular wireless communication technologies. In an access network of the cellular wireless communication system, the network device typically includes a number of base stations (referred to as Node Bs, or evolved Node Bs (eNBs), or enhanced Node Bs (eNBs)), and other network entities or network elements. Alternatively, broadly speaking, it may be collectively referred to as a network side (Evolved Universal Terrestrial Radio Access Network (E-UTRAN)) in the 3GPP. The base station herein also includes a low power node (LPN) in the network, such as a femto cell or a home node (pico, Relay, femto, HeNB or Home eNB, etc.). For simplicity of description, only three base stations are shown in Fig. 6. The base station provides a certain wireless signal coverage. The terminal (or a UE, or a device) within the coverage can communicate with the base station wirelessly. A wireless signal coverage area of a base station may be divided into one or more cells or sectors based on certain criteria, for example, possibly three cells.

At the time of D2D communication, there is also similar time synchronization between the transmitting terminal UE and the receiving terminal UE, that is, the receiving terminal obtains the transmission timing of the corresponding D2D signal to determine the reception timing of the corresponding D2D signal. For D2D communication between cells, the receiving terminal UE may determine the D2D reception timing of the corresponding neighbor cell by detecting the D2D synchronization signal transmitted by the D2D UE of the neighbor cell. At the same time, the receiving terminal UE can obtain the configuration information of D2D resources of the neighbor cell from the base station to which the serving cell belongs. On this basis, the receiving terminal UE can only determine the resource location in which the D2D signal is received to extract the content of the corresponding D2D signal. There are a variety of implementations for the D2D synchronization signals transmitted by the D2D UE of the neighbor cell.

### Embodiment 1

A simple way to realize the D2D UE transmitting a synchronization signal, in the received indication signaling, N is 1, and the transmission offset is 0. That is, all the D2D UEs in the cell transmit the D2D synchronization signal by default, that is, all the D2D UEs transmit the D2D synchronization signal on the fixed resource in each D2D resource period. In addition, all the D2D UEs in the cell transmit the D2D synchronization signal based on the same transmission timing assumption, and the combining gain can be formed on the reception UE side.

For the synchronization deployment network, the synchronization timing between neighbor cells is strictly aligned, and the D2D resource areas of neighbor cells are also aligned. For the non-synchronization deployment network, the synchronization timing between neighbor cells is not aligned, and the D2D resource areas of neighbor cells may be aligned or may be not aligned. Therefore, the D2D synchronization signal may interfere with the D2D signal and/or the cellular signal. The D2D UE may transmit the D2D synchronization signal in such a manner as to reduce the transmission power to reduce the interference of the D2D synchronization signal to the D2D signal and/or the cellular signal when all the D2D UEs transmit the D2D synchronization signal.

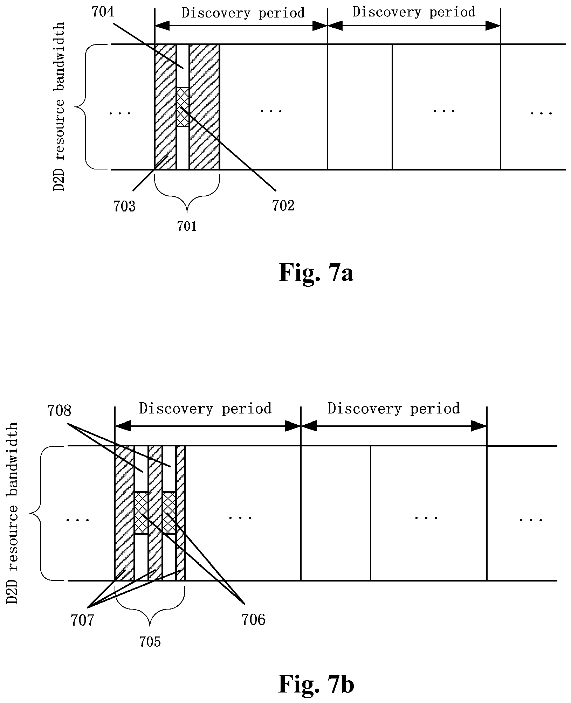

Based on the description of the D2D discovery, in order to avoid a conflict between the D2D synchronization signal and the D2D discovery signal, when the D2D UE selects to transmit the D2D discovery signal on the resource containing the D2D synchronization signal, all the frequency domain resources of the SC-FDM symbol transmitting the D2D synchronization signal correspondingly are not used to transmit the D2D signal. Fig. 7a and 7b are the first and the second schematic diagrams of a D2D synchronization signal transmission according to a first preferred embodiment of the present disclosure. An example of the present embodiment is shown in Fig. 7a and 7b, herein Fig. 7a corresponds to one SC-FDM symbol to transmit the D2D Synchronization signal, and Fig. 7b corresponds to two SC-FDM symbols to transmit the D2D synchronization signal. It is hereby exemplified that the number of the SC-FDM symbols transmitting the D2D synchronization signal may be more than two, and the SC-FDM symbols transmitting the D2D synchronization signal may be continuous or discrete. 701 and 705 are sub-frames fixed for transmitting the D2D synchronization signal in the discovery resource period. In the figure, the first sub-frame is taken as an example, 702 and 706 are the resource locations of the D2D synchronization signal, 702 corresponds to one SC-FDM symbol in the time domain, 706 corresponds to two SC-FDM symbols in the time domain, and the frequency domain represent six RBs in the middle of the bandwidth. 704 and 708 are SC-FDM symbols in which the D2D synchronization signal is located, 704 corresponds to one SC-FDM symbol, and 708 corresponds to two SC-FDM symbols. 703 and 707 are the resource locations of the discovery signal, and the discovery signal is not transmitted on the SC-FDM symbol corresponding to of the D2D synchronization signal or 704 (the discovery signal is one of the D2D signals).

### Embodiment 2

The received indication signaling includes a parameter N and a transmission offset. All D2D UEs in the cell transmit the D2D synchronization signal according to the D2D synchronization signal transmission period which is N times of the D2D resource period, where N is a positive integer. In each D2D synchronization signal transmission period, each D2D UE transmits a D2D synchronization signal once. Each D2D UE transmits the D2D synchronization signal in the corresponding D2D resource period in the D2D synchronization signal transmission period according to the transmission offset so that the D2D UE corresponding to a different transmission offset transmits a synchronization signal within a different D2D resource period. The synchronization signal is fixed for transmission in the first sub-frame within the D2D resource period.

The D2D UE may also calculate a transmission offset transmitting the D2D synchronization signal correspondingly according to the parameter N in the received indication signaling and in combination with parameters such as UE identification, radio frame number, and the like.

According to N, the D2D UE may be divided into N different groups. The UE packet may be based on a UE identifier capable of uniquely identifying the UE, such as the International Mobile Subscriber Identification Number (IMSI) of the UE or the ID assigned by the base station when scheduling the UE. Taking discovery as an example, assuming that the discovery resource period is M radio frames and the UE identifier is labelled as UEID, the packet index j, j = 0, 1, ..., N-1 of the UE can be obtained according to (UEID mod N). The period index k of transmitting the synchronization signal is obtained again according to ((SFN/M) mod N), and the D2D UE whose packet is in the j-th group selects to transmit the synchronization signal in the period of the period index k = j. Herein mod is the modulo operation, / is the division operation, and SFN is the wireless frame number index.

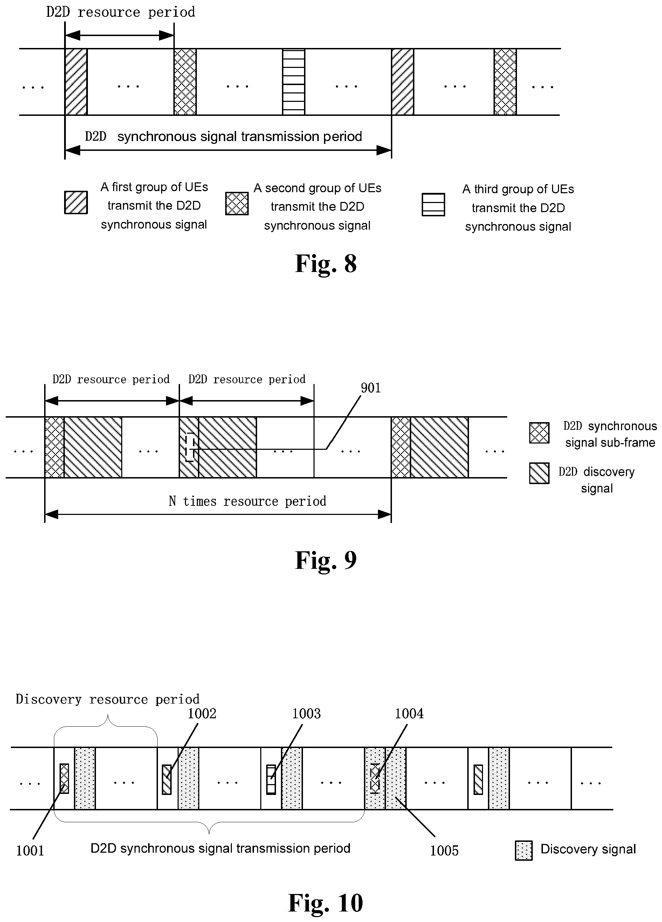

Fig. 8 is a schematic diagram of a D2D synchronization signal transmission according to a second preferred embodiment of the present disclosure. As shown in Fig. 8, it is an example that the UE in which N = 3 is divided into three groups. The D2D UE transmits the D2D synchronization signal once every 3 times of the D2D resource period length.

The D2D UE may also implement the D2D synchronization signal transmission according to the RSRP threshold parameters in the received indication signaling. At the same time, it is also possible to realize different D2D synchronization signal transmission offsets corresponding to different UEs in a manner of grouping. For example, the RSRP threshold is divided into N groups where N is a positive integer. Each group of thresholds corresponds to a group of UEs. The D2D UEs that satisfy different thresholds belong to different groups. The RSRP threshold value is issued by the base station to all D2D UEs by broadcast. For example, the determination threshold corresponding to the RSRP of the corresponding serving cell is divided into a threshold range 1 and a threshold range 2. For a D2D UE, the UE is assigned to the first group if the RSRP of the serving cell satisfies the threshold range 1, and the UE is assigned to the second group if the threshold range 2 is satisfied. D2D UEs of different groups correspond to different D2D synchronization signal transmission periods and D2D synchronization signal transmission offsets. When N = 1, there is only one RSRP threshold range. As long as the UE satisfies a threshold range, the D2D synchronization signal is transmitted. For example, if the RSRP of the UE is less than the RSRP threshold, the D2D synchronization signal is transmitted.

### Embodiment 3

The D2D synchronization signal is transmitted in the first sub-frame of the D2D resource period, and when the D2D UE transmits the D2D signal (the D2D discovery signal or the D2D communication signal) on the first sub-frame, transmission resource overlaps occurs. There are the following methods of solving the resource conflict of the transmission D2D synchronization signal and the transmission D2D signal.

Method 1: The D2D synchronization signal takes precedence over the D2D signal. The D2D signal is not transmitted on the sub-frame in which the D2D synchronization signal is transmitted. Taking the D2D discovery as an example, when the D2D UE selects the resource for transmitting a D2D discovery signal in the discovery resource period in which the D2D synchronization signal is transmitted, the resource for transmitting the D2D discovery signal is selected on other resources in the discovery resource period other than the first sub-frame. However, for the discovery resource period in which the D2D synchronization signal is not transmitted, the D2D UE selects the resource for transmitting the D2D discovery signal in the entire discovery resource period. When selecting the resource for transmitting the D2D discovery signal and the resource for transmitting the D2D synchronization signal collides, the D2D signal is not transmitted in the frequency domain resource for transmitting the D2D synchronization signal in the SC-FDM symbol corresponding to the D2D synchronization signal. Fig. 9 is a first schematic diagram of a D2D synchronization signal transmission according to a third preferred embodiment of the present disclosure. As shown in Fig. 9, 901 correspond to the resource location of the D2D synchronization signal.

Method 2: The D2D signal takes precedence over the D2D synchronization signal. If the D2D UE selects the resource of the first sub-frame to transmit the D2D signal during the D2D resource period in which the D2D synchronization signal is transmitted, the D2D synchronization signal is not transmitted during the D2D resource period. At the same time, for the time and frequency domain resources where the resource for transmitting the D2D signal and the resource for transmitting the D2D synchronization signal collide, the D2D signal is not transmitted. That is, in the SC-FDM symbol corresponding to the D2D synchronization signal, the D2D signal is not transmitted on the frequency domain resource for transmitting the D2D synchronization signal. Fig. 10 is a second schematic diagram of a D2D synchronization signal transmission according to a third preferred embodiment of the present disclosure. As shown in FIG. 10, it is an example of Method 1. The transmission period of the D2D synchronization signal is three times of the discovery resource period, i.e., N = 3. D2D UE can be divided into three groups according to different D2D synchronization signal transmission offsets. 1001, 1002 and 1003 correspond to the first group, the second group, and the third group of D2D UEs for transmitting the D2D synchronization signal respectively, and the resource for transmitting the D2D synchronization signal is fixed as the first sub-frame of the discovery resource period. 1005 corresponds to the fact that the D2D UE selects to transmit the discovery signal on the first sub-frame. In the first group of D2D UEs corresponding to the discovery resource period, the D2D synchronization signal is transmitted, but because the discovery signal is to be transmitted on the first sub-frame, the D2D synchronization signal is not transmitted. Moreover, the data of the discovery signal is not mapped at the resource location in which the D2D synchronization signal is transmitted corresponding to 1004 to avoid mutual interference with the D2D synchronization signal transmitted by other UEs in the first group of D2D UEs.

Method 3: the D2D signal and the synchronization signal are transmitted in a concentrated manner. When the D2D UE selects the resource for transmitting the D2D signal in the resource period in which the D2D synchronization signal is transmitted, the resource of the D2D signal is actively selected to be the first sub-frame in the D2D resource period, and the data of the D2D signal is not mapped on the SC-FDM symbol corresponding to the transmission D2D synchronization signal in the first sub-frame. However, for the resource period in which the D2D synchronization signal is not transmitted, when the D2D UE selects the resource for transmitting the D2D signal, the resource for transmitting the D2D signal is selected during the entire D2D resource period. When selecting the resource for transmitting the D2D signal and the resource for transmitting the synchronization signal conflicts, the D2D signal is not transmitted on the conflicting resource. That is, the D2D signal is not transmitted on the frequency domain resource in which the D2D synchronization signal is transmitted within the SC-FDM symbol corresponding to the D2D synchronization signal.

Fig. 11 is a third schematic diagram of a D2D synchronization signal transmission according to a third preferred embodiment of the present disclosure. As shown in FIG. 11, it is an example of Method 3. 1100 and 1103 are the first sub-frames in the discovery resource period. For some D2D UE, the D2D synchronization signal is transmitted in 1100, and the D2D synchronization signal is not transmitted in 1103. 1102 and 1104 correspond to discovery signal resources. In 1100, the D2D UE selects to transmit in the same sub-frame as the D2D synchronization signal. 1101 is the SC-FDM symbol where the D2D synchronization signal is located, and the data of the discovery signal is not mapped over the entire symbol where the D2D synchronization signal is located. In 1103, since the D2D UE does not transmit the D2D synchronization signal, the data of the discovery signal may be mapped on the frequency domain resources other than the frequency domain resource of the D2D synchronization signal within the SC-FDM symbol corresponding to the D2D synchronization signal resource location.

### Embodiment 4

For D2D UEs in the RRC connected state, it is possible to select which UEs send the D2D synchronization signal by the base station to indicate the D2D UE in a manner of signaling. The base station can determine the UE sending the D2D synchronization signal in a manner of random selection. For example, a D2D UE is randomly selected from the D2D UE in the RRC connected state, such as UE1, and the D2D synchronization signal is transmitted. After a period of time, such as 10ms, 20ms, 50ms ... and so on, another D2D UE is selected, such as UE2, and the D2D synchronization signal is transmitted. Similarly, the base station may also select a part of UEs in the D2D UEs in the RRC connected state to transmit the D2D synchronization signal, such as selecting UE₁, UE₂, ..., UEᵢ to transmit the D2D synchronization signal, where i is less than K and K is the number of the D2D UEs in the RRC connected state in the cell. In addition, the base station may also select a different D2D UEs to transmit the D2D synchronization signal according to different transmission periods. For example, UE₁, UE₂, ..., UEᵢ are selected to transmit the D2D synchronization signal according to the transmission period N1, and UEᵢ+1, UE_{i +2,} ..., UEᵢ₊ⱼ are selected to transmit the D2D synchronization signal according to the transmission period N2, where i + j should be smaller than the number of the D2D UEs in the RRC connected state in the cell.

The base station can also select the D2D UE that transmits the D2D synchronization signal in a manner of scheduling according to the following several manners:
Method 1: one D2D UE is sequentially selected to transmit the D2D synchronization signal in a polling manner, or the D2D UEs in the RRC connected state are divided into three groups according to the UE ID, and different groups of D2D UEs are selected in the order of 1 → 2 → 3 → 1 to transmit the D2D synchronization signal respectively.
Method 2: N D2D UEs with the larger CQI and/or MCS are selected according to the CQI of the cellular uplink and/or the MCS of the uplink data to transmit the D2D synchronization signal. For example, N is 2, 4, 8, 16 ... and so on.
Method 3: N D2D UEs with the larger path loss are selected according to the path loss for measuring the cellular uplink to transmit the D2D synchronization signal. For example, N is 2, 4, 8, 16 ... and so on.

The base station specifies a dedicated resource for D2D UEs in the RRC connected state in a semi-static manner and is configured to transmit the D2D signal. For the D2D UE transmitting the D2D synchronization signal, when the base station allocates dedicated resources for it, it should avoid the sub-frames that transmit the D2D synchronization signal, such as the first sub-frame in the D2D resource period.

The base station may indicate the D2D UE by RRC dedicated signaling. The indication signaling indicates the indicated content by the bit string, including whether to transmit the D2D synchronization signal, the transmission period, and the valid time in which the synchronization signal is transmitted. For example, it is represented by 16 bits, where 1 bit indicates whether to transmit the D2D synchronization signal. 7 bits indicate the transmission period, and the maximum transmission period which is 128 times of the D2D resource period can be supported in the unit of the D2D resource period. 8 bits indicate the valid time in which the synchronization signal is transmitted, and the maximum valid time which is 256 times of the D2D resource period can be supported. The information indicating whether to transmit the D2D synchronization signal by the base station may also be indicated in the same signaling as the information indicating the D2D dedicated resource, and the validity period in which the synchronization signal is transmitted may coincide with the validity period in which the D2D dedicated resource is allocated. In addition, the base station can also indicate the D2D synchronization signal transmission information by newly adding the DCI format. The RNTI of the newly added DCI corresponds to the D2D synchronization signal. The DCI content includes whether to transmit the D2D synchronization signal, the transmission period, and the valid time in which the synchronization signal is transmitted.

In another embodiment, there is also provided software for carrying out the technical solutions described in the abovementioned embodiments and the preferred embodiments.

In another embodiment, there is also provided a storage medium in which the abovementioned software is stored, including but not limited to optical disks, floppy disks, hard disks, rewritable memories, and the like.

Obviously, those skilled in the art should know that each module or step of the embodiment of the present disclosure can be implemented by a universal computing device, and the modules or steps can be concentrated on a single computing device or distributed on a network formed by a plurality of computing devices, and can be implemented by programmable codes executable for the computing devices, so that the modules or steps can be stored in a storage device for execution with the computing devices, and can execute the steps shown or described in an order different from this in some cases, or can form each integrated circuit module, or multiple modules or steps therein can form a single integrated circuit module for implementation. As a consequence, the present disclosure is not limited to any specific hardware and software combination.

The above is only the preferred embodiments of the present disclosure and not intended to limit the present disclosure, and for the technician of the field, the present disclosure can have various modifications and variations. Any modifications, equivalent replacements, improvements and the like within the spirit and principle of the present disclosure shall fall within the scope of protection of the present disclosure.

### Industrial Applicability

As described above, the embodiments of the present disclosure provide a D2D communication method and device, which has the following beneficial effects that: the problem that D2D UEs belonging to neighbor cells under different base stations cannot realize timing synchronization in the related art is solved, and the effect is realized that D2D UEs belonging to neighbor cells under different base stations transmit a D2D synchronization signal for synchronization within a D2D resource period determined to transmit the D2D synchronization signal, and a technical basis is provided for reducing the influence of transmitting the D2D synchronization signal on D2D communication in consideration of the D2D resource period in which the D2D synchronization signal is transmitted.

## Claims

1. A Device-to-Device (D2D) communication method, comprising:
determining, by a D2D User Equipment (UE), whether to transmit a D2D synchronization signal within a current D2D resource period; and
if so, transmitting, by the D2D UE, the D2D synchronization signal,
wherein the D2D UE determines whether to transmit the D2D synchronization signal within the current D2D resource period according to at least one of the following:
a received indication signalling; a priority rule.

2. The method according to claim 1, wherein the D2D UE determines whether to transmit the D2D synchronization signal according to the indication signaling, comprising:
in the case that the indication signaling indicates a D2D resource period in which the D2D synchronization signal is transmitted, if the current D2D resource period is the D2D resource period indicated by the indication signaling, transmitting, by the D2D UE, the D2D synchronization signal.

3. The method according to claim 2, wherein the indication signaling comprises:
a parameter for indicating a D2D synchronization signal transmission period and/or a D2D synchronization signal transmission offset,
wherein the D2D UE determines the D2D resource period in which the D2D synchronization signal is transmitted according to the parameter.

4. The method according to claim 2, wherein the indication signaling further comprises:
a parameter for indicating valid time of the content in the indication signaling,
wherein the D2D UE updates the content in the indication signaling according to the parameter of the valid time.

5. The method according to claim 3 or 4, wherein
the D2D synchronization signal transmission period is N times of the D2D resource period, and N is a positive integer; and/or
the D2D synchronization signal transmission offset is an offset amount of the D2D resource period in which the D2D UE transmits the D2D synchronization signal within the D2D synchronization signal transmission period, and the D2D resource period is an offset granularity.

6. The method according to claim 3, further comprising:
obtaining the D2D synchronization signal transmission offset also by calculating an identification number of the D2D UE and a parameter for indicating the D2D synchronization signal transmission period.

7. The method according to claim 2, wherein the indication signaling further comprises:
a parameter for indicating a radio resource location where the D2D UE transmits the D2D signal;
wherein the D2D UE transmits the D2D signal at a radio resource location corresponding to the parameter of the radio resource location.

8. The method according to claim 1, wherein the D2D UE determines whether to transmit the D2D synchronization signal according to the indication signaling, further comprising:
in the case that the indication signaling indicates a Reference Signal Receiving Power (RSRP) threshold for transmitting the D2D synchronization signal, if the RSRP received by the current D2D UE satisfies the RSRP threshold, transmitting, by the D2D UE, the D2D synchronization signal.

9. The method according to any one of claims 1 to 8, wherein
the indication signaling is contained in the broadcast message; or
the indication signaling is a dedicated signalling for the D2D UE, and is contained in dedicated RRC signaling or physical layer signaling.

10. The method according to claim 1, wherein the D2D UE determines whether to transmit the D2D synchronization signal according to the priority rule, further comprising:
when the D2D UE needs to transmit a D2D signal, determining, by the D2D UE, a resource location for transmitting the D2D signal; and
if the radio resource transmitting the D2D signal collides with the radio resource for transmitting the D2D synchronization signal, no D2D signal will be transmitted within the time domain resource transmitting the D2D synchronization signal; or no D2D synchronization signal will be transmitted within the D2D resource period; or no D2D signal will be transmitted within a D2D resource unit containing the D2D synchronization signal time domain resource, the D2D resource unit being a minimum resource transmitting the D2D signal.

11. The method according to claim 1, wherein the D2D UE determines whether to transmit the D2D synchronization signal according to the priority rule, further comprising:
when the D2D UE needs to transmit a D2D signal, determining, by the D2D UE, a resource location for transmitting the D2D signal; and
if the radio resource transmitting the D2D signal collides with the radio resource for transmitting the D2D synchronization signal, no D2D signal will be transmitted within the colliding radio resource.

12. The method according to any one of claims 1 to 11, further comprising:
selecting, by the base station, a part of or all D2D UEs in the radio resource control (RRC) connected state to transmit the D2D synchronization signal; and
issuing, by the base station, the indication signaling according to the selecting result.

13. The method according to claim 12, wherein the method further comprises:
for a D2D UE that transmits a D2D synchronization signal, specifying, by the base station, the radio resource for transmitting the D2D signal within the D2D resource period for the D2D UE in a semi-static scheduling manner, and avoiding radio resource for transmitting the D2D synchronization signal in the time domain.

14. A Device-to-Device (D2D) communication method, comprising:
receiving, by a current D2D User Equipment (UE), a D2D synchronization signal from a D2D UE of the neighbor cell, wherein the current D2D UE determines whether to receive the D2D synchronization signal within the current D2D resource period according to the received indication signaling; and
implementing, by the current D2D UE, the synchronization of D2D communication with the D2D UE of the neighbor cell according to the D2D synchronization signal.

15. The method according to claim 14, wherein the method further comprises:
not receiving, by the current D2D UE, a D2D signal within a resource receiving the D2D synchronization signal.

16. A Device-to-Device (D2D) communication device, located in a D2D User Equipment (UE), comprising:
a determining module, configured to determine whether to transmit a D2D synchronization signal within a current D2D resource period; and
a transmitting module, configured to transmit the D2D synchronization signal in the case that the determining result of the determining module is yes;
wherein the D2D UE determines whether to transmit the D2D synchronization signal within the current D2D resource period according to at least one of the following:
a received indication signalling; and a priority rule.

17. The device according to claim 16, wherein the determining module is further configured to:
in the case that the indication signaling indicates a D2D resource period in which the D2D synchronization signal is transmitted, if the current D2D resource period is the D2D resource period indicated by the indication signaling, determine to transmit the D2D synchronization signal.

18. The device according to claim 17, wherein the indication signaling comprises:
a parameter for indicating a D2D synchronization signal transmission period and/or a D2D synchronization signal transmission offset,
wherein the D2D UE determines the D2D resource period in which the D2D synchronization signal is transmitted according to the parameter.

19. The device according to claim 17, wherein the indication signaling further comprises:
a parameter for indicating valid time of the content in the indication signaling,
wherein the D2D UE updates the content in the indication signaling according to the parameter of the valid time.

20. The device according to claim 18 or 19, wherein
the D2D synchronization signal transmission period is N times of the D2D resource period, and N is a positive integer; and/or
the D2D synchronization signal transmission offset is an offset amount of the D2D resource period in which the D2D UE transmits the D2D synchronization signal within the D2D synchronization signal transmission period, and the D2D resource period is an offset granularity.

21. The device according to claim 18, wherein the device further comprises:
a calculation module configured to obtain the D2D synchronization signal transmission offset by calculating an identification number of the D2D UE and a parameter for indicating the D2D synchronization signal transmission period.

22. The device according to claim 17, wherein the indication signaling further comprises:
a parameter for indicating a radio resource location where the D2D UE transmits the D2D signal;
wherein the D2D UE transmits the D2D signal at a radio resource location corresponding to the parameter of the radio resource location.

23. The device according to claim 16, wherein the determining module is further configured to:
in the case that the indication signaling indicates a Reference Signal Receiving Power (RSRP) threshold for transmitting the D2D synchronization signal, if the RSRP received by the current D2D UE satisfies the RSRP threshold, transmit, by the D2D UE, the D2D synchronization signal.

24. The device according to any one of claims 16 to 23, wherein
the indication signaling is contained in the broadcast message; or
the indication signaling is a dedicated signalling for the D2D UE, and is contained in dedicated RRC signaling or physical layer signaling.

25. The device according to claim 16, wherein the determining module is further configured to:
when the D2D UE needs to transmit a D2D signal, determine a resource location for transmitting the D2D signal; and
if the radio resource transmitting the D2D signal collides with the radio resource for transmitting the D2D synchronization signal, no D2D signal will be transmitted within the time domain resource transmitting the D2D synchronization signal; or no D2D synchronization signal will be transmitted within the D2D resource period; or no D2D signal will be transmitted within a D2D resource unit containing the D2D synchronization signal time domain resource, the D2D resource unit being a minimum resource transmitting the D2D signal.

26. The device according to claim 16, wherein the determining module is further configured to:
when the D2D UE needs to transmit a D2D signal, determine, by the D2D UE, a resource location for transmitting the D2D signal; and
if the radio resource transmitting the D2D signal collides with the radio resource for transmitting the D2D synchronization signal, no D2D signal will be transmitted within the colliding radio resource.

27. A Device-to-Device (D2D) communication device, located in a D2D User Equipment (UE), comprising:
a receiving module, configured to receive a D2D synchronization signal from a D2D UE of the neighbor cell, wherein the D2D UE determines whether to receive the D2D synchronization signal within the current D2D resource period according to the received indication signaling; and
a synchronizing module, configured to implement the synchronization of D2D communication with the D2D UE of the neighbor cell according to the D2D synchronization signal.

28. The device according to claim 27, wherein the receiving module is further configured to:
not receive a D2D signal within a resource receiving the D2D synchronization signal.
